# FASCICULE DE BREVET EUROPEEN

(11) **EP 1 571 517 B1**
(45) Date de publication et mention de la délivrance du brevet: **11.04.2007**
(21) Numéro de dépôt: 05004301.7
(22) Date de dépôt: 28.02.2005
(51) Int. Cl.: B64C 27/51, G05D 19/02, F16F 15/00, F16F 9/53

(54) **Procédé de contrôle de l'amortissement de vibrations d'un hélicoptère et dispositif mettant en oeuvre le procédé**
Steuerungsverfahren und Vorrichtung für die Dämpfung der Schwingungen eines Hubschraubers
Control method for damping helicopter vibrations and device executing that method

(30) Priorité: 03.03.2004 FR 0402169
(43) Date de publication de la demande: 07.09.2005
(73) Titulaire: EUROCOPTER, 13725 Marignane Cédex (FR)
(72) Inventeur: Zoppitelli, Elio, 13880 Velaux (FR)
(74) Mandataire: Renaud-Goud, Thierry

(56) Documents cités:
- EP-A- 1 130 280
- FR-A- 2 826 933
- FR-A- 2 835 506
- US-A- 3 638 885

## Description

La présente invention se rapporte au domaine technique des hélicoptères et plus particulièrement au domaine de l'optimisation des conditions d'utilisation desdits hélicoptères.

Les hélicoptères comportent des rotors entraînant des pales. La rotation des pales génère sur ces dernières des mouvements en traînée, connus des constructeurs. Les mouvements en traînée sont à l'origine de vibrations, sous forme d'oscillations, altérant la stabilité de l'hélicoptère et le confort de vol. Il est donc important de garantir l'absence de toute instabilité de l'hélicoptère, en particulier de résonance sol et de résonance air, dont on explique le principe aux paragraphes suivants. Le mouvement de traînée induit également dans le fuselage des forces longitudinales et latérales génératrices de mouvements de tangage et de roulis, ainsi que des moments parasites dans la chaîne cinématique.

Au sol, l'hélicoptère peut subir un phénomène de couplage mécanique particulier, appelé résonance sol dans le domaine aéronautique. Ainsi, pour une vitesse de rotation donnée du rotor, le fuselage présente un mode propre de pulsation, et les pales présentent un mode propre de pulsation de traînée. Les mouvements des pales induisent des efforts sur le rotor donnant naissance à des mouvements de la structure, lesquels ont à leur tour un effet sur les mouvements des pales. Si les fréquences des modes du fuselage et du rotor sont suffisamment proches et si ces modes sont insuffisamment amortis, les mouvements de traînée des pales et les mouvements de la structure vont s'amplifier mutuellement et risquent de devenir dangereux.

Afin d'agir sur ce phénomène, outre l'optimisation de la raideur et de l'amortissement du train d'atterrissage, on utilise un amortisseur de traînée, monté entre deux pales successives ou entre une pale et le rotor, pour éviter ce couplage, en modifiant la fréquence de mouvement de traînée et, le cas échéant, en apportant de l'amortissement sur le mode vibratoire de traînée.

Un tel amortisseur est connu de FR-A-2826933, qui représente l'état de la technique le plus proche.

En vol, l'hélicoptère peut subir un phénomène de résonance de même type que celui décrit précédemment mais provenant d'un couplage entre le mode de pulsation de traînée des pales et le mode d'oscillation pendulaire du fuselage. Ce phénomène, connu sous le nom de résonance air, est généralement aggravé par des configurations de vol sévères, comme les virages par exemple, car la forte amplitude de la réponse dynamique forcée des amortisseurs, imposée par le rotor entraînant les pales, affaiblit alors leurs caractéristiques d'amortissement de la réponse naturelle, dont la fréquence est plus basse que celle de la réponse forcée.

Si l'amortisseur de traînée présente un amortissement élevé, le moyeu, assurant la liaison entre les pales et l'arbre d'entraînement en rotation du rotor, devra subir des efforts très importants durant le temps de vol, entraînant une fatigue importante et un risque de rupture de pièces mécaniques. Ceci est admissible pour des phases de vol relativement brèves. En revanche, en configuration de vol normale, les amortisseurs de traînée ne devraient donc amortir les vibrations que lorsque celles-ci génèrent une instabilité, par exemple lors de configurations de vol délicates du type virages ou autres. On peut ainsi réduire l'échauffement et par conséquent les risques d'usure prématurée.

Le degré d'amortissement des amortisseurs de traînée devrait donc s'adapter aux configurations de fonctionnement et de vol, si l'on souhaite limiter les efforts sur le moyeu lorsqu'il n'y a pas de risques de résonance.

On connaît des amortisseurs de traînée dont on peut contrôler un laminage d'huile circulant d'une chambre à une autre et inversement, via des valves spécifiques. Un tel amortisseur présente par exemple un comportement effort/déplacement, correspondant à un effort de l'amortisseur dépendant de l'amplitude d'oscillations, susceptible de réduire les vibrations de l'hélicoptère.

De tels amortisseurs présentent souvent des problèmes de fiabilité d'une part, et sont très coûteux d'autre part.

Le but de la présente invention vise à remédier aux inconvénients des amortisseurs connus, et de maîtriser les vibrations générées par le mouvement en traînée des pales dans toutes les configurations de fonctionnement de l'hélicoptère. La présente invention permet donc de maîtriser les phénomènes d'instabilité, en particulier de résonance sol et de résonance air, en évitant des usures prématurées de pièces mécaniques et des amortisseurs.

Le but assigné à l'invention est atteint à l'aide d'un procédé de pilotage d'un amortisseur de traînée (revendication 1) d'une pale d'hélicoptère, et ce dans toutes les configurations de fonctionnement de l'hélicoptère, consistant à :
- (a) mesurer l'élongation de l'amortisseur,
- (b) amplifier le signal mesuré et filtrer le bruit,
- (c) isoler la réponse naturelle de la pale correspondant au mouvement de traînée de la pale, de la réponse forcée imposée par un rotor entraînant les pales,
- (d) et analyser en temps réel les réponses, naturelle et forcée, et ajuster l'amortissement en fonction de cette analyse.

Selon un exemple de mise en oeuvre, le procédé consiste à reprendre en continu les étapes (a) à (d), tant que les pales sont en rotation.

Selon un exemple préférentiel de mise en oeuvre, le procédé consiste à utiliser un amortisseur magnéto-rhéologique et à commander des courants électriques d'alimentation dudit amortisseur.

L'étape (d) consiste par exemple à déterminer l'élongation, la vitesse ou l'accélération résultant de ces réponses, naturelle et forcée, de traînée.

À titre d'exemple, le procédé consiste à déterminer les fonctions représentatives, en fonction du temps, de la réponse naturelle de traînée en vitesse d'(t) et de la réponse forcée en vitesse D'(t), à calculer le produit P(t)=D'(t).d'(t), et à déterminer si le produit P(t) est positif ou négatif lors de l'étape (d).

Le procédé consiste par exemple à augmenter l'amortissement si le produit P(t) est positif.

Selon un autre exemple de mise en oeuvre, le procédé consiste à calculer la position du centre de gravité des pales, à déterminer un écartement entre le centre de gravité des pales et l'axe du rotor, et à transformer cet écartement, en un signal de commande agissant sur l'amortisseur, rapprochant ainsi le centre de gravité des pales de l'axe du rotor.

Le but de la présente invention est également atteint avec un dispositif de pilotage de l'amortissement (revendication 8) du mouvement en traînée des pales d'un hélicoptère, le dispositif pour mettre en oeuvre le procédé décrit ci-dessus, comportant :
- un amortisseur de traînée associé à chaque pale,
- un capteur d'élongation relié à l'amortisseur,
- un amplificateur pour amplifier les signaux délivrés par le capteur,
- des moyens de traitement du signal pour séparer la réponse naturelle de traînée de la réponse forcée de chaque pale,
- et des moyens d'analyse et de commande agissant sur l'amortisseur en ajustant ses caractéristiques d'amortissement.

Ce dispositif présente l'avantage d'être piloté et par conséquent facilement ajustable aux différentes applications. Les amortisseurs peuvent ainsi être pilotés de manière à amortir les vibrations basse fréquence (inférieure à la fréquence de rotation du rotor) seulement lorsque c'est nécessaire. Il n'y a donc pas de dissipation d'énergie inutilement.

Selon un exemple de réalisation, le dispositif comporte un microprocesseur pilotant la fréquence d'analyse et de commande.

L'amortisseur de traînée est de préférence un amortisseur magnéto-rhéologique.

Ce dernier présente l'avantage de fonctionner à des températures comprises entre - 40° C et + 150° C. Les fluides magnéto-rhéologiques présentent une très faible variation de raideur dans cette plage de température. En outre, les impuretés apparaissant lors de la fabrication et de l'usage de l'amortisseur n'altèrent pas son fonctionnement. Les amortisseurs magnéto-rhéologiques peuvent également être contrôlés par un courant électrique de 1 à 2 ampères, sous un faible voltage (12-24 Volts). Ses caractéristiques évoluent avec la température, mais cette évolution peut être compensée par un ajustement du champ magnétique. Le temps de réponse de tels amortisseurs est par ailleurs faible. Le temps de passage pour passer de 10% à 90% de la force générée par l'amortisseur pour une excitation donnée est de 8 millisecondes.

Un autre avantage est lié à la grande simplicité de pilotage et de commande.

La présente invention concerne aussi un rotor d'hélicoptère comportant un dispositif d'amortissement du mouvement en traînée des pales, tel que présenté ci-dessus.

D'autres caractéristiques et avantages ressortiront également de la description détaillée figurant ci-après, en référence aux dessins annexés à titre d'exemples non limitatifs dans lesquels :
- la figure 1 représente des vibrations bi-fréquentielles de pales d'hélicoptère,
- la figure 2 est une représentation schématique partielle d'un amortisseur magnéto-rhéologique utilisé dans le procédé conforme à l'invention,
- la figure 3 schématise un exemple de mise en oeuvre du procédé conforme à l'invention,
- la figure 4 schématise un autre exemple de mise en oeuvre du procédé conforme à l'invention.

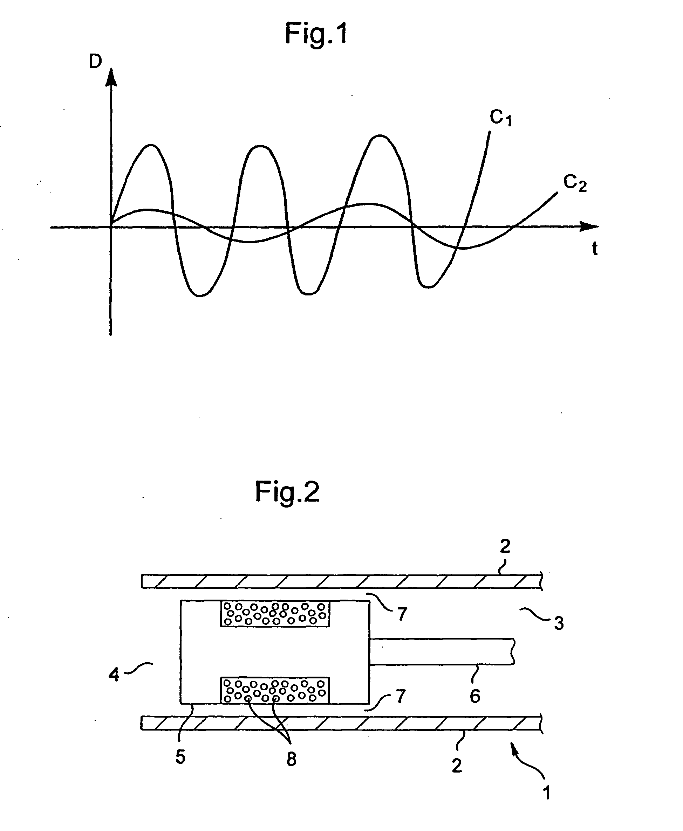

Les mouvements en traînée des pales génèrent des oscillations de deux types. Le premier type d'oscillations présente la même fréquence, dite forcée, que celle du rotor de l'hélicoptère. Le second type d'oscillations correspond à des oscillations de traînée présentant une fréquence naturelle et une amplitude plus faibles que celles du premier type. Les deux types d'oscillations sont appelées respectivement, réponse forcée et réponse naturelle des pales. Ces réponses sont schématisées à la figure 1 avec les courbes C1 et C2.

Le dispositif de pilotage conforme à l'invention comporte un amortisseur de traînée 1 associé à chaque pale. L'amortisseur est de préférence un amortisseur magnéto-rhéologique 1, schématisé partiellement à la figure 2. L'amortisseur 1 comporte une armature 2, délimitant une première chambre 3 et une seconde chambre 4. Le fluide magnéto-rhéologique est déplacé d'une chambre vers l'autre et inversement par l'intermédiaire d'un piston 5 se déplaçant dans l'armature 2. Le piston 5 est actionné par une tige 6 et présente des dimensions permettant de réaliser un passage 7 pour le fluide, entre les deux chambres 3 et 4. Une bobine électrique 8 est montée par exemple sur la périphérie du piston 5 pour générer un champ magnétique. Le fonctionnement d'un tel amortisseur magnéto-rhéologique est déjà connu.

Le dispositif de pilotage comporte aussi un capteur 9 d'élongation relié à l'amortisseur de traînée 1, pour mesurer le déplacement de la tige 6 par rapport à l'armature 2. Un amplificateur 10 du signal délivré par le capteur 9 peut également être prévu.

Le dispositif comporte également des moyens de traitement du signal pour séparer la réponse naturelle de traînée de la réponse forcée de chaque pale, auxquels sont associés des moyens d'analyse et de commande agissant sur l'amortisseur en ajustant ses caractéristiques d'amortissement.

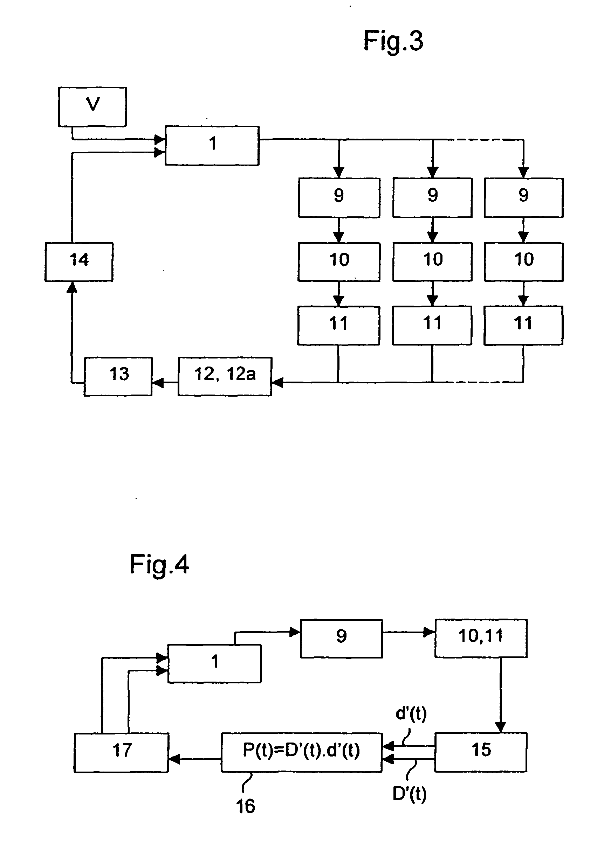

Selon l'exemple schématisé à la figure 3, la séparation des réponses naturelle et forcée est effectuée par un moyen de filtrage 11 1 permettant de supprimer les fréquences hautes de la réponse mesurée. Les vibrations bi-fréquentielles auxquelles sont soumises les pales peuvent ainsi être séparées en un signal de fréquence forcée et un signal de fréquence naturelle de traînée plus faible à l'aide de moyens de traitement du signal 12.

Le dispositif de pilotage comporte également des moyens de calcul 12a donnant le déplacement du centre de gravité des pales par rapport au rotor. Des moyens de traitement électroniques 13 sont également prévus pour commander un générateur de tension 14 relié à l'amortisseur de traînée 1, en fonction des résultats obtenus par les moyens de calcul 12a et les moyens de traitement du signal 12. Ces résultats reflètent les vibrations V transmises à l'amortisseur de traînée 1. Les moyens de calcul comprennent avantageusement un microprocesseur. Ce dernier pilote par exemple la fréquence d'analyse et de commande. Le pilotage d'un amortisseur de traînée 1, en l'occurrence magnéto-rhéologique se fait donc de façon fiable, rapide et précise.

Selon un autre exemple de réalisation, schématisé à la figure 4, le signal issu du moyen de filtration 11 1 alimente une unité de décomposition du signal 15, séparant la fonction correspondant à la réponse forcée en vitesse D'(t) de la fonction correspondant à la réponse naturelle en vitesse d'(t). D'(t) et d'(t) sont des réponses en vitesse en fonction du temps. Un calculateur 16 du type microprocesseur est ensuite utilisé pour calculer le produit P(t)=D'(t).d'(t).

Le dispositif selon cet exemple, comporte un système de contrôle 17, intégrant un générateur de courants électriques relié à l'amortisseur 1. Le système de contrôle détermine à partir de caractéristiques du signal calculé P(t), si l'amortisseur de traînée 1 doit être activé ou non.

Le dispositif de pilotage schématisé à titre d'exemple aux figures 3 et 4 permet donc de présenter le procédé conforme à l'invention selon deux modes de mise en oeuvre.

Le procédé de pilotage de l'amortisseur de traînée 1, consiste à mesurer son élongation, à amplifier le signal mesuré et à filtrer le bruit accompagnant ledit signal. On isole ensuite la réponse naturelle de la pale de la réponse forcée. Ceci permet d'identifier et d'analyser les vibrations auxquelles est soumis l'hélicoptère.

Les étapes présentées ci-dessus sont par exemple reprises en continu tant que les pales sont en rotation. On peut alors agir sur le phénomène de résonance sol et sur le phénomène de résonance air.

On peut également à partir de la détermination précédente calculer la position du centre de gravité des pales et déterminer un écartement entre le centre de gravité des pales et l'axe du rotor.

On transforme ensuite cet écartement en un signal de commande agissant sur l'amortisseur 1, pour ramener cet écartement à une valeur faible ou nulle. Dans des phases de vol délicates par exemple, on peut réduire de façon intelligente les vibrations sans pour autant générer des effets négatifs additionnels, tels qu'une fatigue ou une usure prématurée d'éléments constitutifs de l'hélicoptère.

Selon une variante de mise en oeuvre conforme à l'invention, le procédé consiste à déterminer les fonctions représentatives en fonction du temps de la réponse naturelle de traînée en vitesse d'(t) et de la réponse forcée en vitesse D'(t). On calcule ensuite le produit de ces deux fonctions, à savoir P(t)=D'(t).d'(t), afin de déterminer si P(t) est positif ou négatif, pour mettre en oeuvre l'étape (d). Le procédé consiste par exemple à augmenter l'amortissement si P(t) est positif.

On peut ainsi n'apporter de l'amortissement à un taux élevé que lorsque cet apport contribue à la stabilisation de la réponse naturelle, c'est-à-dire lorsque l'effort résultant s'oppose à ce mouvement naturel. En effet, il apparaît que l'amplitude des déplacements relatifs à la réponse forcée est plus importante que celle de la réponse naturelle. L'effort résultant de l'amortisseur 1 est toujours opposé au signal prédominant, c'est-à-dire la réponse forcée, et l'amortisseur 1 dissipe toujours l'énergie sur la réponse forcée. Or il peut arriver que l'effort agisse dans le sens de la réponse naturelle avec un produit P(t) négatif. Dans ce cas, l'amortisseur de traînée 1 travaille sur le mode de traînée. C'est précisément ce qu'il faut éviter pour réduire les vibrations. Il faut donc réduire l'amortissement dans ce cas correspondant à un produit P(t) négatif.

L'amortisseur de traînée 1 magnéto-rhéologique peut ainsi, selon un exemple d'utilisation, n'être activé pour augmenter l'amortissement que dans le cas d'un produit P(t) positif. Le système de contrôle 17 fonctionne par exemple sur le principe du tout ou rien, c'est à dire en induisant un champ magnétique maximal ou nul dans l'amortisseur 1 magnéto-rhéologique.

## Revendications

1. Procédé de pilotage d'un amortisseur de traînée d'une pale d'hélicoptère et ce, dans toutes les configurations de fonctionnement de l'hélicoptère, consistant à :
- (a) mesurer l'élongation de l'amortisseur,
- (b) amplifier le signal mesuré et filtrer le bruit,
- (c) isoler la réponse naturelle de la pale correspondant au mouvement de traînée de la pale, de la réponse forcée imposée par un rotor entraînant les pales,
- (d) et analyser en temps réel la réponse naturelle et ajuster l'amortissement en fonction de cette analyse.

2. Procédé selon la revendication 1,
**caractérisé en ce qu**'il consiste à reprendre en continu les étapes (a) à (d), tant que les pales sont en rotation.

3. Procédé selon la revendication 1 ou 2,
**caractérisé en ce qu**'il consiste à utiliser un amortisseur magnéto-rhéologique et à commander des courants électriques d'alimentation dudit amortisseur.

4. Procédé selon l'une quelconque des revendications 1 à 3,
**caractérisé en ce que** l'étape (d) consiste à déterminer l'élongation, la vitesse ou l'accélération résultant de cette réponse naturelle de traînée.

5. Procédé selon l'une quelconque des revendications 1 à 3,
**caractérisé en ce qu'**il consiste à déterminer les fonctions représentatives en fonction du temps de la réponse naturelle de traînée en vitesse d'(t) et de la réponse forcée en vitesse D'(t), à calculer le produit P(t)=D'(t).d'(t), et à déterminer si le produit P(t) est positif ou négatif pour mettre en oeuvre l'étape (d).

6. Procédé selon la revendication 5,
**caractérisé en ce qu**'il consiste à augmenter l'amortissement si le produit P(t) est positif.

7. Procédé selon la revendication 4,
**caractérisé en ce qu**'il consiste à calculer la position du centre de gravité des pales, à déterminer un écartement entre le centre de gravité des pales et l'axe du rotor, et à transformer cet écartement, en un signal de commande agissant sur l'amortisseur, rapprochant ainsi le centre de gravité des pales de l'axe du rotor.

8. Dispositif de pilotage de l'amortissement du mouvement en traînée des pales d'un hélicoptère, le dispositif pour mettre en oeuvre le procédé conforme à l'une quelconque des revendications précédentes, comportant :
- un amortisseur de traînée (1) associé à chaque pale,
- un capteur d'élongation (9) relié à l'amortisseur (1),
- un amplificateur (10) pour amplifier les signaux délivrés par le capteur,
- des moyens de traitement du signal (12) pour séparer la réponse naturelle de traînée de la réponse forcée de chaque pale,
- et des moyens d'analyse (12a) et de commande (14) agissant sur l'amortisseur en ajustant ses caractéristiques d'amortissement.

9. Dispositif selon la revendication 8,
**caractérisé en ce qu'**il comporte un microprocesseur pilotant la fréquence d'analyse et de commande.

10. Dispositif selon la revendication 8 ou 9,
**caractérisé en ce que** l'amortisseur de traînée (1) est un amortisseur magnéto-rhéologique.

11. Dispositif selon l'une quelconque des revendications 8 à 10,
**caractérisé en ce que** les moyens d'analyse (12a) comprennent des moyens de calcul de la position du centre de gravité des pales à partir des signaux issus de capteurs d'élongation (9) de l'ensemble des pales.

12. Rotor d'hélicoptère comportant un dispositif d'amortissement du mouvement en traînée des pales, conforme à l'une quelconque des revendications 8 à 11.

## Claims

1. A method of controlling a drag damper for a helicopter blade under all the operating configurations of the helicopter, consisting in:
(a) measuring the elongation of the damper,
(b) amplifying the measured signal and filtering noise,
(c) isolating the natural response of the blade, corresponding to the drag movement of the blade, from the forced response imposed by a rotor driving the blades, and
(d) analysing in real time the natural response and adjusting the damping as a function of this analysis.

2. A method according to Claim 1, **characterised in that** it consists in repeating steps (a) to (d) continuously as long as the blades are rotating.

3. A method according to Claim 1 or 2, **characterised in that** it consists in using a magneto-rheological damper and in controlling the electrical currents fed to the said damper.

4. A method according to any one of Claims 1 to 3, **characterised in that** step (d) consists in determining the elongation, speed or acceleration resulting from this natural drag response.

5. A method according to any one of Claims 1 to 3, **characterised in that** it consists in determining the functions that are representative, as a function of time, of the natural drag response in terms of speed d'(t) and the forced response in terms of speed D'(t), in calculating the product P(t) = D'(t).d'(t), and in determining whether the product P(t) is positive or negative in order to implement step (d).

6. A method according to Claim 5, **characterised in that** it consists in increasing the damping if the product P(t) is positive.

7. A method according to Claim 4, **characterised in that** it consists in calculating the position of the centre of gravity of the blades, in determining the distance between the centre of gravity of the blades and the axis of the rotor, and in transforming this distance into a control signal which acts on the damper so that the centre of gravity of the blades and the axis of the rotor are brought closer together.

8. A device for controlling damping of the drag movement of the blades of a helicopter, the device being for implementing the method according to any one of the preceding claims, having:
- a drag damper (1) associated with each blade,
- an elongation sensor (9) connected to the damper (1),
- an amplifier (10) for amplifying the signals supplied by the sensor,
- means (12) of processing the signal in order to separate the natural drag response from the forced response of each blade, and
- analysis means (12a) and control means (14) acting on the damper to adjust its damping characteristics.

9. A device according to Claim 8, **characterised in that** it has a microprocessor controlling the frequency of analysis and control.

10. A device according to Claim 8 or 9, **characterised in that** the drag damper (1) is a magneto-rheological damper.

11. A device according to any one of Claims 8 to 10, **characterised in that** the analysis means (12a) comprise means of calculating the position of the centre of gravity of the blades from signals coming from elongation sensors (9) of all the blades.

12. A helicopter rotor having a device for damping the drag movement of the blades, according to any one of Claims 8 to 11.

## Patentansprüche

1. Verfahren zur Steuerung eines Luftwiderstandsdämpfers eines Hubschrauber-Propellerblatts, und dies unter allen Betriebskonfigurationen des Hubschraubers, das darin besteht:
(a) den Ausschlag des Dämpfers zu messen,
(b) das gemessene Signal zu verstärken und das Rauschen zu filtern,
(c) die natürliche Reaktion des Blatts entsprechend der Luftwiderstandsbewegung des Blatts von der erzwungenen Reaktion zu isolieren, die von einem die Blätter antreibenden Rotor aufgezwungen wird,
(d) und in Echtzeit die natürliche Reaktion zu analysieren und die Dämpfung in Abhängigkeit von dieser Analyse einzustellen.

2. Verfahren nach Anspruch 1, **dadurch gekennzeichnet, dass** es darin besteht, kontinuierlich die Schritte (a) bis (d) so lange zu wiederholen, wie die Blätter sich drehen.

3. Verfahren nach Anspruch 1 oder 2, **dadurch gekennzeichnet, dass** es darin besteht, einen magnetorheologischen Dämpfer zu verwenden und elektrische Speiseströme des Dämpfers zu steuern.

4. Verfahren nach einem der Ansprüche 1 bis 3, **dadurch gekennzeichnet, dass** der Schritt (d) darin besteht, den Ausschlag, die Geschwindigkeit oder die Beschleunigung zu bestimmen, die aus dieser natürlichen Luftwiderstandsreaktion resultiert.

5. Verfahren nach einem der Ansprüche 1 bis 3, **dadurch gekennzeichnet, dass** es darin besteht, die zeitabhängig repräsentativen Funktionen der natürlichen Luftwiderstands-Geschwindigkeitsreaktion d'(t) und der erzwungenen Geschwindigkeitsreaktion D'(t) zu bestimmen, das Produkt P(t)=D'(t).d'(t) zu berechnen, und festzustellen, ob das Produkt P(t) positiv oder negativ ist, um den Schritt (d) anzuwenden.

6. Verfahren nach Anspruch 5, **dadurch gekennzeichnet, dass** es darin besteht, die Dämpfung zu erhöhen, wenn das Produkt P(t) positiv ist.

7. Verfahren nach Anspruch 4, **dadurch gekennzeichnet, dass** es darin besteht, die Position des Schwerpunkts der Blätter zu berechnen, eine Abweichung zwischen dem Schwerpunkt der Blätter und der Achse des Rotors festzustellen, und diese Abweichung in ein Steuersignal umzuwandeln, das auf den Dämpfer einwirkt, wodurch der Schwerpunkt der Blätter der Achse des Rotors angenähert wird.

8. Vorrichtung zur Steuerung der Dämpfung der Luftwiderstandsbewegung der Propellerblätter eines Hubschraubers, wobei die Vorrichtung zur Anwendung des Verfahrens nach einem der vorhergehenden Ansprüche aufweist:
- einen jedem Blatt zugeordneten Luftwiderstandsdämpfer (1),
- einen mit dem Dämpfer (1) verbundenen Ausschlagsensor (9),
- einen Verstärker (10), um die vom Sensor gelieferten Signale zu verstärken,
- Signalverarbeitungsmittel (12), um die natürliche Luftwiderstandsreaktion von der erzwungenen Reaktion jedes Blatts zu trennen,
- und Analyse- (12a) und Steuermittel (14), die auf den Dämpfer einwirken, indem sie seine Dämpfungsmerkmale einstellen.

9. Vorrichtung nach Anspruch 8, **dadurch gekennzeichnet, dass** sie einen Mikroprozessor aufweist, der die Analyse- und Steuerfrequenz steuert.

10. Vorrichtung nach Anspruch 8 oder 9, **dadurch gekennzeichnet, dass** der Luftwiderstandsdämpfer (1) ein magnetorheologischer Dämpfer ist.

11. Vorrichtung nach einem der Ansprüche 8 bis 10, **dadurch gekennzeichnet, dass** die Analysemittel (12a) Mittel zur Berechnung der Position des Schwerpunkts der Blätter ausgehend von den Signalen aufweisen, die von Ausschlagsensoren (9) der Gesamtheit der Blätter stammen.

12. Hubschrauber-Rotor mit einer Vorrichtung zur Dämpfung der Luftwiderstandsbewegung der Blätter gemäß einem der Ansprüche 8 bis 11.
